# EUROPÄISCHE PATENTSCHRIFT

(11) **EP 2 107 662 B1**
(45) Veröffentlichungstag und Bekanntmachung des Hinweises auf die Patenterteilung: **29.06.2011**
(21) Anmeldenummer: 09004813.3
(22) Anmeldetag: 01.04.2009
(51) Int. Cl.: H01H 83/04, H02H 3/33, H01H 83/14

(54) **Fehlerstrom Schutzschalter Vorrichtung**
Residual current circuit breaker device
Dispositif de disjoncteur pour courant différentiel

(30) Priorität: 04.04.2008 DE 102008017499
(43) Veröffentlichungstag der Anmeldung: 07.10.2009
(73) Patentinhaber: Doepke Schaltgeräte GmbH & Co. KG, 26506 Norden (DE)
(72) Erfinder: Esen, Reinhard, 26506 Norden (DE); Schmidt, Manfred, 26524 Berumbur (DE); Grünebast, Günter, 26506 Norden (DE); Freese, Holger, 26624 Südbrookmeerland (DE)
(74) Vertreter: Jabbusch, Matthias

(56) Entgegenhaltungen:
- EP-A- 0 851 450
- EP-A- 1 562 213
- DE-A1-102004 023 202
- DE-B3-102008 006 360
- FR-A- 2 754 949
- JP-A- 6 223 704
- JP-A- 2007 323 991
- US-A- 4 568 997
- US-A- 5 136 458
- US-A1- 2003 189 804

## Beschreibung

Die Erfindung betrifft eine Fehlerstrom-Schutzschalter-Vorrichtung zum Schutz von Personen und elektrischen Anlagen vor Fehlerströmen, umfassend einen Summenstromwandler, durch den die Stromleitungen geführt sind, dem eine Auslöseprüfeinrichtung zugeordnet ist, und der einen in der Stromleitung angeordneten Schaltkontakt beaufschlagt.

Vorrichtungen der eingangs genannten Gattung dienen vorzugsweise zum Schutz gegen elektrischen Schlag sowie zum Schutz gegen elektrisch gezündete Brände. Fehlerstromschutzeinrichtungen der eingangs genannten Gattung sind im Stand der Technik bekannt. Sie welsen einen Summenstromwandler auf, durch den die zu überwachenden aktiven Stromleiter geführt sind. Die vektorielle Summe der Ströme in den aktiven Leitern wird vom Summenstromwandler erfasst und stellt ein Maß für den Fehlerstrom dar. Dem Summenstromwandler Ist elektrisch nachfolgend ein Auslöserelais angeordnet, welches bei Überschreiten eines zulässigen Fehlerstromgrenzwertes über eine Schaltmechanik ein Öffnen der in den Stromleitungen angeordneten Schaltkontakte bewirkt, wodurch im Fehlerfall eine sichere Trennung einer nachfolgenden elektrischen Anlage vom versorgenden Stromnetz gewährleistet ist.

Durch verschiedene Sicherheitsrichtlinien ist gefordert, die Funktion einer Fehlerstromschutzeinrichtung regelmäßig zu überprüfen, Für diese Überprüfung dient eine in der Fehlerstromschutzeinrichtung integrierte Auslöseprüfeinrichtung, welche einen Fehlerstrom simuliert, der bei funktionsfähiger Fehlerstromschutzeinrichtung zum Öffnen des Schaltkontaktes führt.

In elektrischen Anlagen werden häufig sensible Verbraucher eingesetzt, bei denen ein kontinuierlicher Betrieb notwendig ist. Für diese Verbraucher ist es nicht hinnehmbar, dass lediglich zu Testzwecken die Stromleitungen durch die Fehlerstromschutzeinrichtung stromlos geschaltet werden. Zudem Ist bei vielen elektrischen Betriebsmitteln nach einer Spannungsunterbrechung kein automatischer Wiederanlauf vorgesehen oder zulässig, so dass eine zeitaufwendige Initialisierung mit Neustart erforderlich würde.

Eine elektrische Überbrückung einer Fehlerstromschuizeinrichtung zu Prüfzwecken ist unzulässig. Während der Überbrückung besteht kein Schutz für nachfolgende Verbraucher.

Im Stand der Technik ist daher von dem Hersteller Gewiss bereits eine Vorrichtung der eingangs genannten Gattung vorgeschlagen worden, welche durch Einsatz eines schaltbaren Schützes einen Bypass für die Schaltkontakte der Fehlerstromschutzeinrichtung enthält. Das Schütz bildet eine Nebenstromstrecke aus, so dass ohne Unterbrechen der Stromleitungen mit der Auslöseprüfeinrichtung die Schaltkontakte geöffnet und geschlossen werden können. Allerdings ist auch für diesen Fall zu gewährleisten, dass gerade im Moment des Testens ein Fehlerstromschutz ausgebildet ist. Bei der bekannten Vorrichtung wird die Gewährleistung des Fehlerstromschutzes während der Prüfung auf einwandfreie Funktion der Vorrichtung mit Hilfe einer zusätzlichen hilhspannung8abhängigen Schaltung realisiert. Aufgrund der Verwendung nur eines Summenstromwandlers mit einem zugeordneten Prüfstromkreis kann bei dieser bekannten Vorrichtung die einwandfreie Funktion der oben erwähnten zusätzlichen hilfsspannungsabhänglgen Schaltung nicht überprüft werden.

Tritt während des Selbsttests bei geschlossenem Bypass ein Fehlerstrom mit sehr hoher Amplitude auf, wie beispielsweise bei einem Erdkurzschlussstrom, besteht die Gefahr einer mechanischen Verschweißung der Kontakte des Bypasses. Die bekannte Vorrichtung hat für diesen Fall zusätzliche integrierte Schmelzsicherungen vorgesehen, so dass hinter der Vorrichtung angeordnete Q:\IB5JAW\JAWDKA\2010\0\20100020324.doc elektrische Verbraucher geschützt sind. Allerdings ist dann die bekannte Vorrichtung nicht weiter verwendbar, da der Stromweg dauerhaft unterbrochen ist.

Aus der DE 10 2004 023 202 A1 ist bekannt, einen zweiten Summenstromwandler über mechanische Kontakte an einen ersten Summenstromwandler anzuschließen. Bei diesem Anschließen können unkontrollierte Differenzströme auftreten, welche zu einer Abschaltung des zu überprüfenden Summenstromwandlers bzw. des zusätzlich hinzugefügten Summenstromwandlers führen können. Ein Laststrom wird sich in unvorteilhafter Weise über beide Summenstromwandler ungleichmäßig aufteilen, so dass der Summenstrom im Wandler der zu überprüfenden Vorrichtung nicht null ist und es zu einer ungewollten Auslösung kommt.

Der Erfindung liegt die Aufgabe zugrunde, eine Vorrichtung der eingangs genannten Gattung aufzuzeigen, welche die genannten Nachteile vermeidet und welche mit einfächeren Mitteln ein Testen ihrer Funktion bei weiterhin sicherer Durchleitung des elektrischen Stromes gewährleistet.

Diese Aufgabe ist erfindungsgemäß durch die im Anspruch 1 bestimmte Vorrichtung gelöst.

Besondere Ausführungsarten der Erfindung sind in den Unteransprüchen bestimmt.

Bei der erfindungsgemäßen Vorrichtung ist kein Simulieren eines Stromweges und einer Fehlerstromschutzfunktion durch einen Schütz oder durch andere elektronische, netzspannungsabhängige Bauteile gegeben. Vielmehr wird in einfacher Weise ein beispielsweise baugleicher Summenstromwandler dem ersten Summenstromwandler zugeordnet, die Stromleitungen werden auch durch diesen zweiten Summenstromwandler geführt, so dass quasi eine doppelte Absicherung der Stromleitung gegeben ist. Diese doppelte Absicherung ermöglicht es aber, mit Hilfe der Testauslöseeinrichtung bei dem einen oder anderen Summenstromwandler die Funktionsweise zu überprüfen. Wird durch einen Summenstromwandler ein Schaltkontakt geöffnet, so ist der Schaltkontakt des zweiten Summenstromwandlers weiterhin geschlossen, so dass der Strom fließen kann.

Die Summenstromwandler und Schaltkontakte benötigen keine zusätzliche Netzversorgung. Sie funktionieren daher auch bei einem Stromausfall im lokalen Umfeld der erfindungsgemäßen Vorrichtung.

Nach der Erfindung ist vorgesehen, dass der zweite Summenstromwandler durch die Stromleiter zu dem ersten Summenstromwandler in Reihe geschaltet ist. Durch diese Schaltung werden die Stromleitungen nacheinander durch beide Summenstromwandler geführt. Diese Anordnung bildet gegenüber einer parallelen Anordnung der Summenstromwandler zueinander den Vorteil, dass keine Aufteilung des zu überprüfenden Stroms erfolgt. Bei einer derartigen Aufteilung werden bereits aufgrund dieser Aufteilung Fehlerströme generiert, die fortlaufend zu einer Auslösung eines der beiden Summenstromwandler führen würde.

Die Erfindung sieht weiterhin vor, dass die den Fehlerstrom-Schutzschalter Vorrichtung zugeordneten Schaltkontakte parallel zueinander geschaltet sind. Dieses Parallelschalten ist notwendig, damit jeder Schaltkontakt unabhängig von dem anderen den Stromweg öffnen oder schließen kann, ohne dass hinter der erfindungsgemäßen Vorrichtung angeordnete Verbraucher stromlos sind. Die der jeweiligen Einheit zugeordneten Schaltkontakte können dabei in einfacher Weise so ausgestaltet werden, dass sie sowohl elektrisch als auch mechanisch gleichwertig sind und zum Schalten elektrischer Ströme mit hoher Amplitude gemäß einschlägigen Bauvorschriften ausgelegt sind. Somit ist auch gewährleistet, dass ein während der Prüfung der erfindungsgemäßen Vorrichtung auftretender Erdkurzschlussstram mit sehr hoher Amplitude nicht zum Verschweißen der Kontakte führt und die erfindungsgemäße Vorrichtung weiterhin verwendet werden kann.

Nach einer ersten Weiterbildung der Erfindung ist vorgesehen, dass die Summenstromwandler und Schaltkontakte in ein und demselben Gehäuse angeordnet sind. Dieses Gehäuse kann kompakt ausgebildet sein und sämtliche Bauteile aufnehmen. Für einen voluminösen Elektromagnetantrieb eines Schützes ist kein Platz vorzuhalten, so daß diese Kompaktheit gewährleistet sein kann. Selbstverständlich können die Summenstromwandler und zugeordneten Schaltkontakte auch in voneinander separaten Gehäusen angeordnet sein. So läßt sich auch eine MRCD (modular residual current device; modulare Fehlerstromschutzeinrichtung) mit Hilfe der erfindungsgemäßen Vorrichtung realisieren.

Zur weiteren Ausbildung der Erfindung ist noch vorgesehen, daß im Stromkreis der Auslöseprüfeinrichtungen zumindest ein PTC-Widerstand eingesetzt ist. PTC-Widerstände weisen einen positiven Temperaturkoeffizienten auf, welcher bei einer Erhöhung der Umgebungstemperatur ihren Widerstandswert erhöht. Der Einsatz derartiger Widerstände ist vorteilhaft, da bei der erfindungsgemäßen Vorrichtung während eines Prüfvorganges bei vorgesehenem bestimmungs-gemäßen Betrieb der Stromfluß zu den nachfolgenden elektrischen Verbrauchern nicht unterbrochen wird und somit beim dauerhaften Betätigen der Prüftaste ein stetiger Stromfluß über den Prüfkreiswiderstand erfolgt, welcher möglicherweise zu einer thermischen Überlastung des Prüfkreiswiderstandes führen kann.

Anstelle von PTC - Widerständen können aber auch stromregelnde und sich thermisch selbstschützende elektronische Schaltungen eingesetzt werden oder die Windungszahl der Prüftastenwicklung wird so hoch gewählt, dass auch der Einsatz von typischerweise verwendeten Widerständen in kleiner Bauform mit geringer Leistung auch bei dauerhaftem Stromfluß in der Auslöseprüfeinrichtung möglich ist.

Ein weiterer Vorteil der erfindungsgemäßen Vorrichtung ist noch, daß ihre Bauteile relativ preiswert zu beschaffen sind. Die Stromwandler und Schaltkontakte als solche und auch die bevorzugt eingesetzten PTC-Widerstände sind preiswert zu beschaffen und in gewohnter Weise zu verbauen. Die erfindungsgemäße Vorrichtung kann dabei in mindestens zweipoliger Ausführung ausgebildet sein.

Zur Überprüfung der erfindungsgemäßen Vorrichtung auf ihre Funktion sind alle Schaltkontakte zunächst eingeschaltet. Nach Auslösung einer Einheit mittels zugeordneter Auslöseprüfeinrichtung ist es nicht unbedingt notwendig, die entsprechenden Schaltkontakte wieder zu schließen, da die Überwachung der Stromleitungen stets durch eine weitere Einheit gewährleistet ist. Diese Überprüfung kann in vorteilhafter Weise gleichermaßen bei beiden Einheiten durchgeführt werden. Erst wenn sich beide Einheiten im ausgelösten Zustand befinden, werden die zu überwachenden Stromleitungen stromlos. Auch wenn beide Einheiten eingeschaltet sind, erfolgt im tatsächlichen Fehlerfalle stets eine Auslösung beider Einheiten.

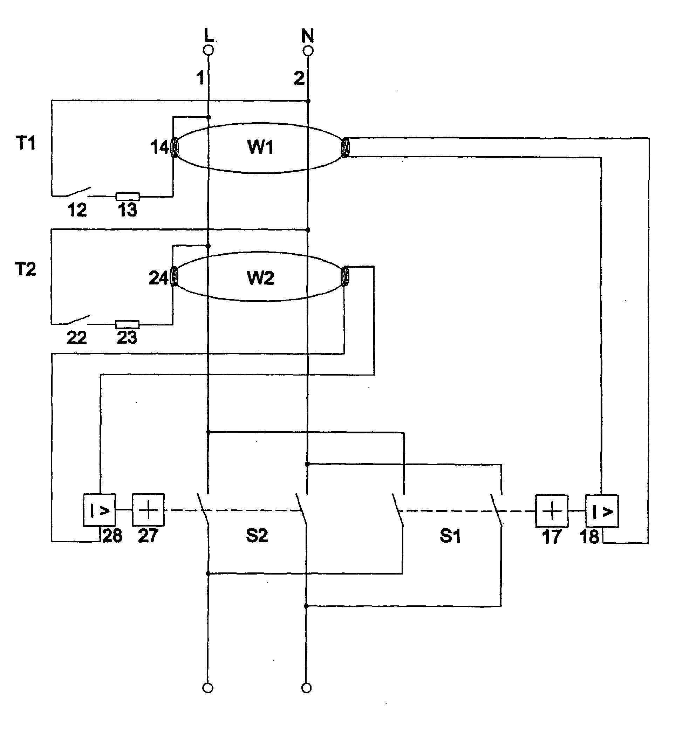

Ein Prinzipschaltbild der erfindungsgemäßen Vorrichtung ist in der Zeichnung dargestellt.

Zwei elektrische Stromwandler W1, W2 der erfindungsgemäßen Fehlerstrom-Schutzschalter-Vorrichtung sind mit ihren durch die elektrischen Stromleiter 1, 2 ausgebildeten Primärwicklungen in Reihe geschaltet. Jeder Stromwandler W1, W2 ist mit seiner Sekundärwicklung mit einem Auslöserelais 18, 28 elektrisch verschaltet. Jedes Auslöserelais 18, 28 ist mit einer Schaltmechanik 17, 27 mechanisch verkoppelt. Jede Schaltmechanik 17, 27 ist mit jeweils zugeordneten Schaltkontakten S1, S2 mechanisch verkoppelt.

Weiterhin ist jedem Summenstromwandler W1, W2 noch eine Auslöseprüfeinrichtung T1, T2 zugeordnet. Jede Auslöseprüfeinrichtung T1, T2 wird durch eine Prüfkreiswicklung 14, 24 und eine Prüftaste 12, 22 sowie einem strombestimmendem Bauteil 13, 23 ausgebildet.

Mit Schließen der Prüftaste 12, 22 kann ein Fehlerstrom simuliert werden, welcher von dem zugeordneten Summenstromwandler W1, W2 festgestellt wird. Der Summenstromwandler W1, W2 bewirkt dann ein Öffnen der zugeordneten Schaltkontakte S1, S2. Mit den Schaltkontakten S1, S2 wird der Stromfluss über die zugeordneten Stromleitungen 1,2 unterbrochen. Eine vollständige Unterbrechung der Stromleitungen 1, 2 ist jedoch erst dann gegeben, wenn beide Schaltkontakte S1, S2 geöffnet sind, wie im Prinzipschaltbild dargestellt. Bevorzugt wird im Prüffall mit der Fehlerstrom-Schutzschalter-Vorrichtung nur eine Einheit eingeschaltet.

## Patentansprüche

1. Fehlerstrom-Schutzschalter-Vorrichtung zum Schutz von Personen und ' elektrischen Anlagen vor Fehlerströmen, umfassend einen ersten Summenstromwandler (W1), durch den Stromleitungen (1, 2) geführt sind, dem eine Auslöseprüfeinrichtung (T1) zugeordnet ist, und der einen in der Stromleitung angeordneten ersten Schaltkontakt (S1) beaufschlagt, wobei wenigstens ein zweiter Summenstromwandler (W2) und wenigstens ein zweiter Schaltkontakt (S2) vorgesehen sind, und die den Summenstromwandlern (W1, W2) zugeordneten Schaltkontakte (S1, S2) parallel zueinander geschaltet sind, und wobei der zweite Schaltkontakt (S2) in Bezug auf den ersten Schaltkontakt (S1) einen Ersatz-Stromweg für den in den Stromleitungen fließenden Strom ausbildet,
**dadurch gekennzeichnet,**
**dass** der zweite Summenstromwandler (W2) durch die Stromleitungen (1,2) zu dem ersten Summenstramwandler (W1) in Reihe geschaltet ist.

2. Vorrichtung nach Anspruch 1, **dadurch gekennzeichnet, dass** die Summenstromwandier (W1, W2) und Schaltkontakte (S1, S2) in ein und demselben Gehäuse angeordnet sind.

3. Vorrichtung nach Anspruch 1, **dadurch gekennzeichnet, dass** die Summenstromwandler (W1, W2) und die zugeordneten Schaltkontakte (S1, S2) in separaten Gehäusen angeordnet sind.

4. Vorrichtung nach einem der vorhergehenden Ansprüche, **dadurch gekennzeichnet, dass** im Stromkreis der Auslöseprüfeinrichtung (T1) zumindest ein PTC - Widerstand (13) eingesetzt ist.

5. Vorrichtung nach einem der Ansprüche 1 bis 3, **dadurch gekennzeichnet, dass** im Stromkreis der Auslöseprüfeindchtung (T1) eine strombestimmende und sich thermisch selbst schützende elektronische Schaltung (13) eingesetzt ist.

6. Vorrichtung nach einem der vorhergehenden Ansprüche, **dadurch gekennzeichnet, dass** eine Prüfkreiswicklung (14) im Stromkreis der Auslöseprüfeinrichtung (T1) eine Vielzahl Windungen aufweist.

## Claims

1. Residual-current circuit breaker for protecting people and electrical systems from fault currents, comprising a first summation current transformer (W1), through which the current leads (1, 2) are routed and to which a tripping test device (T1) is assigned, which summation current transformer loads a first switching contact (S1) arranged in the current lead, wherein at least one second summation current transformer (W2) and at least one second switching contact (S2) are provided, and the switching contacts (S1, S2) assigned to the summation current transformers (W1, W2) are connected in parallel, and wherein the second switching contact (S2) forms a standby current path for the current flowing in the current leads with respect to the first switching contact (S1),
**characterised**
**in that** the second summation current transformer (W2) is connected in series by means of the current leads (1, 2) to the first summation current transformer (W1).

2. Device according to Claim 1, **characterised in that** the summation current transformers (W1, W2) and switching contacts (S1, S2) are arranged in one and the same housing.

3. Device according to Claim 1, **characterised in that** the summation current transformers (W1, W2) and the assigned switching contacts (S1, S2) are arranged in separate housings.

4. Device according to any one of the preceding claims, **characterised in that** at least one PTC thermistor (13) is used in the circuit of the triggering test device (T1).

5. Device according to any one of Claims 1 to 3, **characterised in that** a current-determining thermally self-protecting electronic circuit (13) is used in the circuit of the tripping test device (T1).

6. Device according to any one of the preceding claims, **characterised in that** a test circuit winding (14) has a multiplicity of windings in the circuit of the triggering test device (T1).

## Revendications

1. Interrupteur de protection contre les courants de court-circuit pour la protection des personnes et installations électriques contre les courants de défaut, comprenant un premier transformateur de courant totalisateur (W1), par lequel des lignes électriques (1, 2) sont guidées, auquel un dispositif de contrôle de déclenchement (T1) est attribué, et qui sollicite un premier contact de commutation (S1) disposé dans la ligne électrique, au moins un second transformateur de courant totalisateur (W2) et au moins un second contact de commutation (S2) étant prévus, et les contacts de commutation (S1, S2) attribués aux transformateurs de courant totalisateur (W1, W2) étant branchés parallèlement entre eux, et le second contact de commutation (S2) formant par rapport au premier contact de commutation (S1) un chemin électrique de remplacement pour le courant circulant dans les lignes électriques, **caractérisé en ce que** le second transformateur de courant totalisateur (W2) est branché en série par les lignes électriques (1, 2) par rapport au premier transformateur de courant totalisateur (W1).

2. Dispositif selon la revendication 1, **caractérisé en ce que** les transformateurs de courant totalisateur (W1, W2) et les contacts de commutation (S1, S2) sont disposés dans un seul et même boîtier.

3. Dispositif selon la revendication 1, **caractérisé en ce que** les transformateurs de courant totalisateur (W1, W2) et les contacts de commutation (S1, S2) attribués sont disposés dans des boîtiers séparés.

4. Dispositif selon l'une quelconque des revendications précédentes, **caractérisé en ce qu'**au moins une résistance à coefficient positif de température (13) est utilisée dans le circuit électrique du dispositif de test de déclenchement (T1).

5. Dispositif selon l'une quelconque des revendications 1 à 3, **caractérisé en ce qu'**un circuit (13) électronique déterminant le courant et s'autoprotégeant thermiquement est utilisé dans le circuit électrique du dispositif de test de déclenchement (T1).

6. Dispositif selon l'une quelconque des revendications précédentes, **caractérisé en ce qu'**un enroulement de circuit de test (14) dans le circuit électrique du dispositif de test de déclenchement (T1) présente une pluralité de spires.
